# DEMANDE DE BREVET EUROPEEN

(11) **EP 0 681 082 A1**
(43) Date de publication de la demande: **08.11.1995**
(21) Numéro de dépôt: 95201037.9
(22) Date de dépôt: 24.04.1995
(51) Int. Cl.: E06B 1/60, F16B 5/02

(54) **Jeu d'éléments de fixation pour fixer les montants de porte dans une embrasure de porte**

(30) Priorité: 02.05.1994 BE 9400446
(71) Demandeur: Cnockaert, Erik, B-3970 Leopoldsburg (BE)
(72) Inventeur: Cnockaert, Erik, B-3970 Leopoldsburg (BE)
(74) Mandataire: Ottelohe, Jozef René

(57) **Abrégé**

Jeu d'éléments de fixation pour fixer les montants de porte dans une embrasure de porte (2), lequel jeu de fixation comporte plusieurs moyens de vissage (4), prévus entre l'embrasure de porte (2) et chacun des montants de porte (5) pour régler la distance entre chaque montant de porte et l'embrasure de porte et pour fixer chacun des montants de porte (5) dans l'embrasure de porte (2).

## Description

L'invention a trait à un jeu d'éléments de fixation pour fixer les montants de porte dans une embrasure de porte.

Le système de fixer les montants de porte dans une embrasure de porte au moyen de petits morceaux de bois aux dimensions appropriées montés entre les montants de porte et l'embrasure de porte pour y clouer les montants de porte est connu.

Les désavantages sérieux de ce système sont qu'il faut disposer des morceaux de bois ayant les dimensions appropriées pour occuper l'espace entre les montants de porte et l'embrasure de porte et qu'il faut mastiquer les trous de cou dans les montants de porte par après, après quoi les montants de porte du chambranle peuvent être peints.

Pour remédier à cet inconvénient un jeu d'éléments de fixation pour fixer les montants de porte dans une embrasure de porte est réalisé selon la caractéristique principale de l'invention, le jeu d'éléments de fixation comprenant plusieurs moyens de vissage prévus entre l'embrasure de porte et chacun des montants de porte pour régler la distance entre chaque montant de porte et l'embrasure de porte et pour fixer chaque montant de porte dans l'embrasure de porte.

De ce fait montants de porte finis au préalable peuvent être fixés immédiatement à l'endroit exact d'une embrasure de porte.

A titre d'exemple sans aucun caractère limitant une description plus détaillée de quelques réalisations possibles du jeu d'éléments de fixation selon l'invention est donnée ci-après. Dans cette description référence est faite aux dessins ci-joints, où :
la figure 1 représente une coupe longitudinale d'un des moyens de vissage monté entre un montant de porte et une embrasure de porte faisant partie du jeu d'éléments de fixation;
les figures 2, 3, 4, 5 et 6 représentent des coupes transversales respectivement suivant les lignes II-II, III-III, IV-IV, V-V, VI-VI de la figure 1;
la figure 7 représente une coupe transversale d'une autre réalisation du moyen de vissage représenté à la figure 1;
la figure 8 représente une coupe transversale suivant la ligne VIII-VIII de la figure 7.

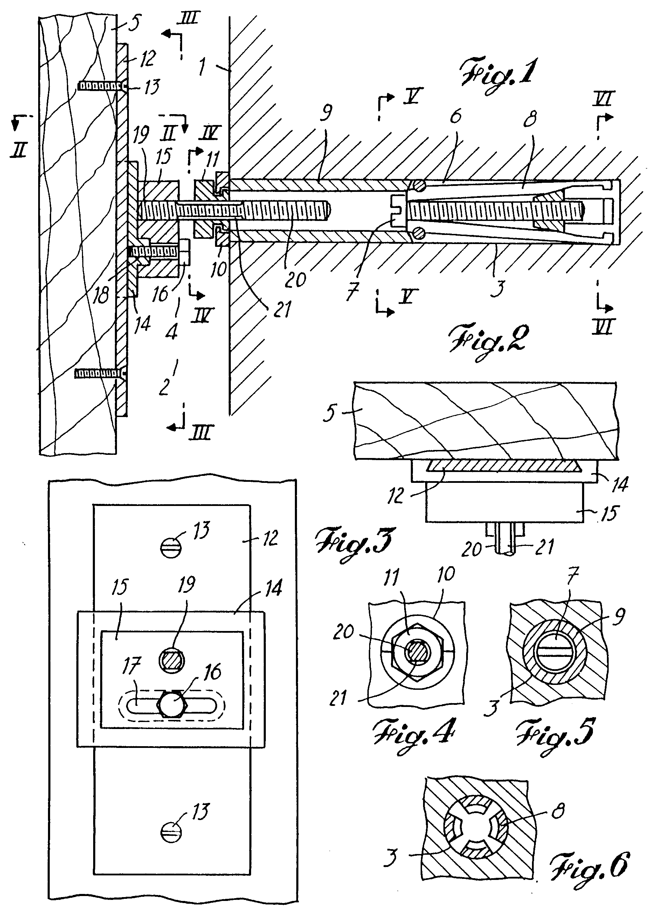

A la figure 1 on peut voir qu'un trou 3 a été foré dans le bord 1 de l'embrasure de porte 2 pour chacun des moyens de vissage 4 dont plusieurs sont apportés l'un au-dessus de l'autre à des distances appropriées entre les bords de l'embrasure de porte et les montants de porte 5. Un boulon à cheville 6 est enfoncé dans le trou 3 et fixé à l'aide d'une vis 7 qui, lorsqu'elle est serrée, ancrera fermement les griffes 8 du boulon à cheville dans le trou 3. Dans ce cas-ci le boulon à cheville est allongé par un manchon 9 dont l'extrémité avant est muni d'un élément annulaire 10 qui y est fixé par soudure et dans lequel un écrou 11 a été monté, qui peut librement tourner autour de son axe et qui saillit du bord de l'embrasure de porte. A la surface intérieure de chaque montant de porte 5 une latte 12 est fixée au moyen de vis 13 en face de chacun des trous 3 forés dans le bord de l'embrasure de porte. Les bords de la latte 12 sont en forme d'une queue d'aronde sur laquelle un chariot 14 est monté, qui est réglable en hauteur et sur lequel une traverse 15 est prévue qui peut être déplacée dans le sens transversal. Le chariot 14 comme la traverse 15 peuvent être réglés dans une position appropriée par rapport au trou 3 foré dans le bord de l'embrasure de porte et fixés au moyen d'une vis 16 qui s'étend par une longue rainure 17 de la traverse 15. L'extrémité libre de la vis 16 se visse dans un trou fileté 18 du chariot 14 en fixant celui-ci sur la latte 12 dans une position appropriée. La traverse 15 est munie d'un trou fileté 19. Dans cette ouverture une extrémité d'une tige filetée 20, munie de deux surfaces planes 21, est serrée à l'aide d'une clé de serrage et en tournant l'écrou 11, qui peut tourner librement autour de son axe, l'autre extrémité est vissée jusqu'à ce que la distance désirée entre le montant de porte 5 et le bord 1 de l'embrasure de porte 2 soit obtenue. Si l'on désire, un contre-écrou, ne pas représenté au dessin, peut être prévu afin de pouvoir bloquer le tout.

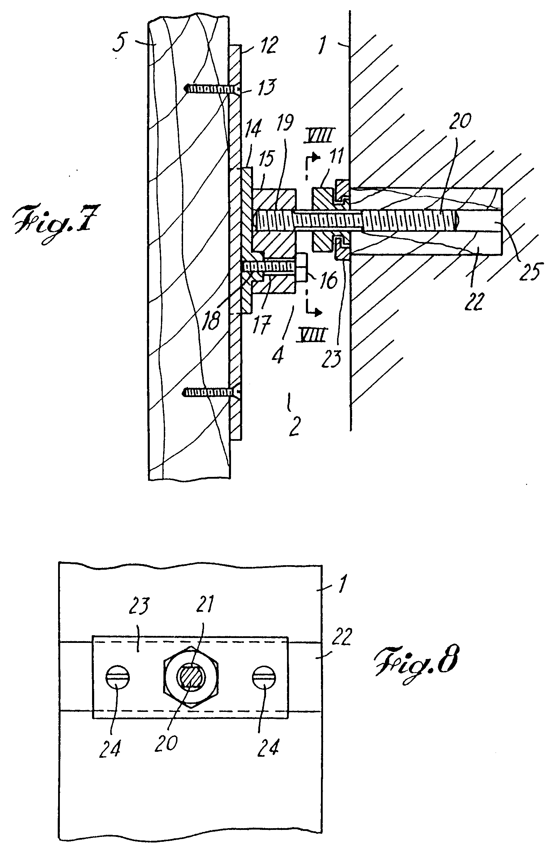

A la figure 7 on remarque que le boulon à cheville 6 peut être remplacé par un morceau de bois 22 incorporé dans le mur, auquel une plaque de fixation 23 est vissée au moyen de vis 24 et où l'écrou 11 peut tourner librement autour de son axe, le morceau de bois étant muni d'un alésage 25 dans lequel la tige filetée 20 peut se déplacer dans le sens axial.

Il est évident qu'un nombre arbitraire de moyens de vissage par montant de porte peut être utilisé et que certaines des pièces décrites ci-dessus pourraient être remplacées par d'autres pièces ayant le même but.

## Revendications

1. Jeu d'éléments de fixation pour fixer les montants de porte dans une embrasure de porte (2), caractérisé en ce qu'il comprend plusieurs moyens de vissage (4), qui sont prévus pour régler la distance entre chacun des montants de porte (5) et l'embrasure de porte et pour fixer chaque montant de porte (5) dans l'embrasure de porte (2).

2. Jeu d'éléments de fixation selon la revendication 1 , caractérisé en ce que chacun des moyens de vissage (4) comprend un support (12-14-15) fixé à la surface intérieure du montant de porte (5) et un support (10) joint au bord de l'embrasure de porte (2), où une tige filetée (20) est vissée dans l'un des supports et l'autre support est muni d'un écrou (11) qui peut tourner librement autour de son axe et qui se visse à la tige filetée (20).

3. Jeu d'éléments de fixation selon la revendication 2, caractérisé en ce que le support fixé à la surface intérieure du montant de porte (5) consiste en une latte (12) fixée au montant de porte (5), en un chariot (14) monté sur la latte (12) et réglable en hauteur et en une traverse (15) qui peut être déplacée dans le sens transversal sur le chariot (14) et dans laquelle la tige filetée (20) peut être vissée.

4. Jeu d'éléments de fixation selon la revendication 2, caractérisé en ce que le support qui est joint au bord (1) de l'embrasure de porte (2) consiste en un boulon à cheville (6) calé dans le bord de l'embrasure de porte, dont la partie saillissant de l'embrasure de porte est munie de l'écrou (11) qui peut tourner librement autour de son axe et qui se visse à la tige filetée (20) pour régler la distance entre le montant de porte (5) et l'embrasure de porte (2) et pour fixer le montant de porte dans l'embrasure de porte.

5. Jeu d'éléments de fixation selon la revendication 2, caractérisé en ce que le support qui est joint au bord (1) de l'embrasure de porte (2) consiste en un morceau de bois (22) fixé dans le bord (1) de l'embrasure de porte (2), auquel a été fixée une plaque de fixation (23), munie de l'écrou (11) qui peut tourner librement autour de son axe, le morceau de bois étant muni d'un alésage longitudinal (25) dans lequel la tige filetée (20) peut être déplacée dans le sens axial.

6. Jeu d'éléments de fixation selon la revendication 2, caractérisé en ce que la tige filetée (20) est munie de deux surface planes (21) auxquelles une clé de serrage peut être appliquée pour serrer la tige filetée dans le support (12-13-14).
